(19) Europäisches Patentamt / European Patent Office / Office européen des brevets

(11) **EP 4 618 257 A1**

(12) **EUROPEAN PATENT APPLICATION**
published in accordance with Art. 153(4) EPC

(43) Date of publication:
**17.09.2025 Bulletin 2025/38**

(21) Application number: **22964875.3**

(22) Date of filing: **11.11.2022**

(51) International Patent Classification (IPC):
**H01M 50/102** (2021.01)  **H01M 50/103** (2021.01)
**H01M 50/593** (2021.01)

(52) Cooperative Patent Classification (CPC):
**H01M 50/102; H01M 50/103; H01M 50/593;**
**Y02E 60/10**

(86) International application number:
**PCT/CN2022/131501**

(87) International publication number:
**WO 2024/098407 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Shenzhen Hithium Energy Storage Technology Co., Ltd.**
  **Shenzhen, Guangdong 518000 (CN)**
• **Xiamen Hithium Energy Storage Technology Co., Ltd.**
  **Xiamen, Fujian 361100 (CN)**

(72) Inventors:
• **ZHOU, Wenyang**
  **Xiamen, Fujian 361100 (CN)**
• **XIONG, Yongfeng**
  **Xiamen, Fujian 361100 (CN)**
• **YANG, Ming**
  **Xiamen, Fujian 361100 (CN)**

(74) Representative: **RGTH**
**Patentanwälte PartGmbB**
**Neuer Wall 10**
**20354 Hamburg (DE)**

(54) **PROTECTIVE FILM ASSEMBLY AND ENERGY STORAGE DEVICE**

(57)     The present disclosure discloses a protective film assembly, applied to an electrode assembly (300) of an energy storage device (1000), and including an insulation sheet (100) for wrapping the electrode assembly (300) , and arranged between a housing of the energy storage device (1000) and the electrode assembly (300). The insulation sheet (100) is integrated, and is provided with a plurality of fold structures (150) , which divide the insulation sheet (100) into a bottom surface covering region (140) clinging to a bottom of the electrode assembly (300), a main surface (110) covering region clinging to a main surface of the electrode assembly (300), and a first side surface (120) covering region and a second side surface (130) covering region clinging to side surfaces of the electrode assembly (300). The first side surface (120) covering region includes a first covering sub-region (121) and a second covering sub-region (122) which can overlap each other; the second side surface (130) covering region includes a third covering sub-region (131) and a fourth covering sub-region (132) which can overlap each other; a maximum sizes of the first covering sub-region (121) and the second covering sub-region (122) in a thickness direction and height direction of the electrode assembly are equal, so that the first covering sub-region (121) and the second covering sub-region (122) have a high matching degree and a large bonding area. The present disclosure further discloses an energy storage device (1000).

**(Cont. next page)**

**FIG. 6**

**Description**

**TECHNICAL FIELD**

The present disclosure relates to the technical field of energy storage, in particular to a protective film assembly and an energy storage device.

**BACKGROUND**

A power energy storage device is an energy storage device commonly used in the technical field of new energy at present. It is widely used in equipment such as an electric vehicle, has the advantages of energy conservation and environmental protection, and is also a development trend of future new energy.

For the power energy storage device, in order to achieve insulation, collision prevention and other protections for a bare cell, an outer surface of the bare cell will be wrapped with a protective film. For example, there is a bottom insulating sheet corresponding to a bottom surface of the bare cell, as well as a main wrapping sheet and an auxiliary wrapping sheet corresponding to the side surface of the bare cell, so as to wrap the bare cell.

However, the insulating sheets in the related art, such as the bottom insulating platet, the main wrapping sheet and the auxiliary wrapping sheet, are usually separated from each other. For such a combined structure, multiple processes such as component collection and sorting, and zoned wrapping are required during the wrapping process, resulting in low wrapping efficiency. Moreover, there are seams between each wrapping sheet, and these seams are prone to warping, leading to poor wrapping stability and reducing the safety performance of the energy storage device.

**SUMMARY**

The embodiments of the present disclosure disclose a protective film assembly and an energy storage device, which can solve the problem of short circuit easily caused by a failure of bonding due to a small bonding area after an insulation sheet is bent in the related technology.

In order to achieve the above object, in a first aspect, the present disclosure discloses a protective film assembly, applied to a bare cell of an energy storage device and comprising an insulation sheet used for wrapping the bare cell, wherein the insulation sheet is arranged between a housing of the energy storage device and the bare cell; the insulation sheet is integrated and is provided with a plurality of fold structures; the fold structures divide the insulation sheet into: a bottom surface covering region, clinging to a bottom of the bare cell; a main surface covering region, connected to the bottom surface covering region and clinging to a main surface of the bare cell; a first side surface covering region, comprising a first covering sub-region and a second covering sub-region, wherein the first covering sub-region and the second covering sub-region are connected to one side of the main surface covering region; the first covering sub-region and the second covering sub-region overlap after being bent along the fold structures, and cling to a first side surface of the bare cell perpendicular to the main surface; and a second side surface covering region, comprising a third covering sub-region and a fourth covering sub-region, wherein the third covering sub-region and a fourth covering sub-region are connected to the other side of the main surface covering region; the third covering sub-region and a fourth covering sub-region overlap after being bent along the fold structures, and cling to a second side surface of the bare cell perpendicular to the main surface.

Optionally, the first side surface and the second side surface are oppositely arranged; a maximum size of the first covering sub-region in a first direction is equal to the maximum size of the second covering sub-region in the first direction, and the maximum size of the first covering sub-region in the second direction is equal to the maximum size of the second covering sub-region in the second direction; the first direction is a thickness direction of the bare cell, and the second direction is a height direction of the bare cell.

Optionally, the bottom surface covering region satisfies: 273 mm$\leq$L1$\leq$277 mm, and 55.5 mm$\leq$H1$\leq$59.5 mm.

L1 is a length of the bottom surface covering region.

H1 is a width of the bottom surface covering region.

Optionally, the bottom surface covering region satisfies: 1.03$\leq$P1/L1$\leq$1.06, and 1.03$\leq$Q1/H1$\leq$1.06.

P1 is a length of the bare cell.

Q1 is a thickness of the bare cell.

A lengthwise direction of the bottom surface covering region and a lengthwise direction of the bare cell are both along a third direction, and a width direction of the bottom surface covering region and a thickness direction of the bare cell both face the first direction.

Optionally, the bottom surface covering region satisfies: 0.19$\leq$H1/L1$\leq$0.21.

Optionally, a maximum size of the third covering sub-region in the first direction is equal to a maximum size of the fourth covering sub-region in the first direction, and a maximum size of the third covering sub-region in the second direction is equal to a maximum size of the fourth covering sub-region in the second direction;

Optionally, one side of the first covering sub-region close to the second covering sub-region is provided with a chamfer structure, and/or one side of the third covering sub-region close to the fourth covering sub-region is provided with a chamfer structure.

Optionally, the fold structures comprise a plurality of through holes; the plurality of through holes are arranged in sequence along a fold forming direction of the fold structures;

Optionally, a plurality of through holes can be arranged in rows along the fold forming direction, and the fold structures may comprise one or two rows of through holes.

Optionally, the through hole satisfies:

$$0.7 \text{ mm} \leq L3 \leq 1.3 \text{ mm, and } 0.06 \text{ mm} \leq H3 \leq 0.21 \text{ mm,}$$

L3 is a length of the through hole, and H3 is a width of the through hole.

Optionally, the through hole satisfies: 0.7 mm$\leq$L4$\leq$0.9 mm; and L4 is a size of a spacing between adjacent through holes.

Optionally, the through hole satisfies: 1.2$\leq$L3/L4$\leq$1.3.

Optionally, a lengthwise direction of the through hole is parallel to the fold forming direction.

Optionally, the through hole satisfies: 9$\leq$L3/H3$\leq$11.

Optionally, the protective film assembly also comprise a bottom supporting plate, stacked on one surface of the bottom surface covering region close to the bottom of the bare cell.

Optionally, one side of the bottom supporting plate facing the bottom surface covering region is provided with a plurality of hot-melting portions;

the bottom supporting plate is connected to the insulation sheet through the plurality of hot-melting portions in a hot-melting manner.

Optionally, the hot-melting portion satisfies:

$$2.7 \text{ mm} \leq M1 \leq 2.9 \text{ mm, and } 13 \text{ mm} \leq N1 \leq 13.6 \text{ mm.}$$

M1 is a width of the hot-melting portion, and N1 is a length of the hot-melting portion.

Optionally, the hot-melting portion satisfies 4.5$\leq$N1/M1$\leq$5.

Optionally, the hot-melting portion satisfies: 30 mm$\leq$M2$\leq$30.6 mm; and M2 is a size of a spacing between adjacent hot-melting portions.

Optionally, a width direction of the hot-melting portion is consistent with the lengthwise direction of the bottom surface covering region, and the plurality of hot-melting portions are disposed in turn in the lengthwise direction of the bottom surface covering region; and a lengthwise direction of the hot-melting portion is consistent with the width direction of the bottom surface covering region.

Optionally, the hot-melting portion satisfies: 0.08$\leq$M1/M2$\leq$0.1.

Optionally, the insulation sheet is provided with a first permeable hole, and the bottom supporting plate is provided with a second permeable hole; the first permeable hole is in communication with the second permeable hole; and an opening area of the first permeable hole is larger than an opening area of the second permeable hole.

Optionally, the bottom supporting plate is provided with a plurality of notches; the notches are arranged at an edge of the bottom supporting plate; and the notches are used for being in communication with an inner cavity of the housing.

Optionally, a projection area of the bottom supporting plate along the height direction of the bare cell is smaller than a projection area of the bottom surface covering region along the height direction of the bare cell.

Optionally, the bottom supporting plate satisfies:

$$268 \text{ mm} \leq L2 \leq 272 \text{ mm, and } 55 \text{ mm} \leq H2 \leq 55.6 \text{ mm.}$$

L2 is a length of the bottom supporting plate, and H2 is a width of the bottom supporting plate; the lengthwise direction of the bottom supporting plate is consistent with the lengthwise direction of the bottom surface covering region; and the width direction of the bottom supporting plate is consistent with the width direction of the bottom surface covering region.

Optionally, the bottom supporting plate satisfies:1.01$\leq$L1/L2$\leq$1.03,and 1.01$\leq$H1/H2$\leq$1.03.

Optionally, the bottom supporting plate satisfies:0.19$\leq$H2/L2$\leq$0.21.

Optionally, the notch satisfies:79.6 mm≤M3≤80 mm, and 6.5 mm≤N3≤7.5 mm.

M3 is a length of the notch, and N3 is a width of the notch.

Optionally, the plurality of notches are disposed in sequence along the lengthwise direction of the bottom supporting plate; and the lengthwise direction of the notch is consistent with the lengthwise direction of the bottom supporting plate.

Optionally, the notch satisfies:0.45≤M3/L2≤0.5.

Optionally, the notch satisfies: 49.2 mm≤M4≤50.2 mm. M4 is a size of a spacing between adjacent notches.

Optionally, the notch satisfies: 1.4≤M3/M4≤1.8.

The present disclosure further discloses another protective film assembly, applied to a bare cell of an energy storage device and comprising an insulation sheet used for wrapping the bare cell, wherein the insulation sheet is arranged between a housing of the energy storage device and the bare cell; the insulation sheet is integrated and is provided with a plurality of fold structures; the fold structures divide the insulation sheet into: two main surface covering regions, clinging a main surface of the bare cell; a first side surface covering region, comprising a first covering sub-region, a fifth covering sub-region and a second covering sub-region which are arranged in turn, wherein one of the two main surface covering regions is connected between the first covering sub-region and the fifth covering sub-region, and the other main surface covering region is connected between the fifth covering sub-region and the second covering sub-region; and a bottom surface covering region, clinging a bottom of the bare cell, wherein the bottom surface covering region is connected to one of the two main surface covering regions; the first covering sub-region and the second covering sub-region overlap each other after being bent along the fold structures and cling to a first side surface of the bare cell perpendicular to the main surface; the fifth covering sub-region cling to a second side surface of the bare cell perpendicular to the main surface after being folded along the fold structures; the first side surface and the second side surface are oppositely arranged.

Optionally, the maximum size of the first covering sub-region in the first direction, the maximum size of the second covering sub-region in the first direction, and the maximum size of the fifth covering sub-region in the first direction are equal; the maximum size of the first covering sub-region in the second direction, the maximum size of the second covering sub-region in the second direction, and the maximum size of the fifth covering sub-region in the second direction are equal; and the first direction is the thickness direction of the bare cell, and the second direction is the height direction of the bare cell.

In a second aspect, the present disclosure discloses an energy storage device, comprising a housing, a bare cell, an end cover assembly, and the protective film assembly, the insulation sheet and the bare cell are both accommodated in an inner cavity of the housing; the end cover assembly is connected to one side of the bare cell facing away from the bottom surface covering region, and covers an opening of the housing.

## BENEFICIAL EFFECTS

In the present disclosure, by means of structural optimization for the protective film assembly, the protective film assembly specifically comprises: an insulation sheet provided with a plurality of fold structures. The fold structures divide the insulation sheet into a bottom surface covering region, a main surface covering region, a first side surface covering region and a second side surface covering region. The insulation sheet can be bent by means of the fold structures, so that the protective film assembly is enclosed into a protective cover for covering the bare cell. When the protective film assembly is enclosed into the protective cover: the bottom surface covering region is a bottom wall of the protective cover to cover the bottom surface of the bare cell; the main surface covering region and the first side surface covering region are enclosed into a circumferential wall of the protective cover to cover the side surfaces of the bare cell; the second side surface covering region is adhered to a surface of the first side surface covering region facing away from the bare cell; and furthermore, the maximum size of the second side surface covering region in the first direction is equal to the maximum size of the first side surface covering region in the first direction, and the maximum size of the second side surface covering region in the second direction is equal to the maximum size of the first side surface covering region in the second direction. The maximum size of the third covering sub-region in the first direction is equal to the maximum size of the fourth covering sub-region in the first direction, and the maximum size of the third covering sub-region in the second direction is equal to the maximum size of the fourth covering sub-region in the second direction. The first direction is a width direction of the bare cell, and the second direction is a height direction of the bare cell.

It can be seen that, in the first aspect, the insulation sheet in the present disclosure is integrated, which is convenient for bending and bonding. By means of integration, the insulation sheet can be bent to form a protective cover, so that the possibility of reserving gaps at edges of the protective cover, thereby improving the wrapping effect on the bare cell.

In the second aspect, the first covering sub-region and the second covering sub-region cling to one side of the main surface covering region, and the third covering sub-region and the fourth covering sub-region cling to the other side of the main surface covering region, so that the insulation sheet has more bonding positions after being bent, thereby obtaining a larger bonding area, and improving the wrapping effect on the bare cell.

In the third aspect, by means of size control of the second side surface covering region and the first side surface covering region, the matching degree between the first covering sub-region and the second covering sub-region, and the matching degree between the third covering sub-region and the fourth covering sub-region are increased, in this way, a large bonding area can be ensured between the first covering sub-region and the second covering sub-region, and between the third covering sub-region and the fourth covering sub-region, so as to ensure the structural stability of the formed protective cover, thus ensuring a good insulation effect and improving the safety performance of the energy storage device.

In the fourth aspect, due to the high matching degree between the first covering sub-region and the second covering sub-region, as well as between the third covering sub-region and fourth covering sub-region, no materials will be wasted in the first covering sub-region and the second covering sub-region, the third covering sub-region and the fourth covering sub-region, which saves the material cost.

To sum up, the protective film assembly of the present disclosure can reduce the cost, improve the efficiency and improve insulation performance.

## BRIEF DESCRIPTION OF THE DRAWINGS

In order to explain the technical solutions of the embodiments of the present disclosure more clearly, the following will briefly introduce the accompanying drawings used in the embodiments. Apparently, the drawings in the following description are only some embodiments of the present disclosure. Those of ordinary skill in the art can obtain other drawings based on these drawings without creative work.

FIG. 1 is an exploded diagram of an energy storage device disclosed by the present disclosure;
FIG. 2 is a combined diagram of an energy storage device disclosed by the present disclosure;
FIG. 3 is a structural diagram of a first kind of insulation sheet disclosed by the present disclosure;
FIG. 4 is an enlarged diagram of part I of FIG. 3 disclosed by the present disclosure;
FIG. 5 is a structural diagram of a bottom supporting plate disclosed by the present disclosure;
FIG. 6 is a combined structural diagram of an insulation sheet and a bottom supporting plate disclosed by the present disclosure;
FIG. 7 is a sectional diagram along A-A in FIG. 6 disclosed by the present disclosure;
FIG. 8 is a sectional diagram along B-B in FIG. 6 disclosed by the present disclosure;
FIG. 9 is a sectional diagram along C-C in FIG. 6 disclosed by the present disclosure;
FIG. 10 is a structural diagram of a second kind of insulation sheet disclosed by the present disclosure;
FIG. 11 is a structural diagram of a third kind of insulation sheet disclosed by the present disclosure; and
FIG. 12 is a schematic diagram of application of the energy storage device to electric equipment in the present disclosure.

Numerals in the drawings:

100: insulation sheet;
110: main surface covering region; 120: first side surface covering region; 121: first covering sub-region; 122: second covering sub-region; 125: fifth covering sub-region;
130: second side surface covering region; 131: third covering sub-region; 132: fourth covering sub-region; 140: bottom surface covering region; 150: fold structures; 151: through hole; 160: first permeable hole;
200: bottom supporting plate;
210: hot-melting portion; 220: second permeable hole; 230: plurality of notche;
300: bare cell;
400: end cover assembly;
X: first direction; Y: second direction; Z: third direction;
1000: energy storage device; 2000: electric equipment.

## DETAILED DESCRIPTION OF THE EMBODIMENTS

The technical solutions in the embodiments of the present disclosure will be clearly and completely described below in conmunction with the accompanying drawings in the embodiments of the present disclosure. Apparently, the described embodiments are only a part of the embodiments of the present disclosure, rather than all the embodiments. Based on the embodiments in the present disclosure, all other embodiments obtained by those ordinarily skilled in the art without doing creative work shall fall within the protection scope of the present disclosure.

In the present disclosure, The terms "upper", "lower", "left", "right", "front", "rear", "top", "bottom", "inner", "outer", "middle", "vertical", "horizontal", "transverse", "longitudinal", and the like indicate azimuth or positional relationships based primarily on the azimuth or positional relationships shown in the drawings, Not intended to define the indicated device, element or component must have a particular orientation, or be constructed and operated in a particular orientation.

Furthermore, the above-described partial terms may be used in addition to indicating azimuth or positional relationships, It may also be used to refer to other meanings, such as the term "above" in some cases may also be used to refer to certain dependencies or connectivity. The specific meanings of these terms in the present disclosure will be understood by those of ordinary skill in the art as the case may be.

In addition, the terms "mounted", "disposed", "provided", "connected", "connected", and "socket" are to be construed broadly to mean, for example, a fixed connection, a detachable connection, or an integral construction; It may be a mechanical connection, or an electrical connection; The specific meaning of the above-mentioned terms in the present disclosure will be understood by those of ordinary skill in the art as the case may be, either directly, or indirectly, via an intermediate medium, or internal communication between two devices, elements, or components.

In addition, the terms "first", "second", etc., are used primarily to distinguish different devices, elements or components (the specific type and construction may be the same or different) and are not used to indicate or imply the relative importance or quantity of the indicated device, element or component. Unless otherwise stated, "plurality" means two or more.

The following will be described in detail with reference to the drawings.

In the relevant technology, an outer surface of a bare cell will be covered with a layer of insulation sheet to achieve insulation, collision prevention and other protections for the bare cell. However, the insulation sheet has a limited bonding area, so the bonding strength of a bonding position of the bent insulation sheet is low, leading to an easy bonding failure. As a result, the bare cell fails to be covered, and the safety performance of the energy storage device is reduced. The objective of the present disclosure is to solve this problem, which will be described in detail below.

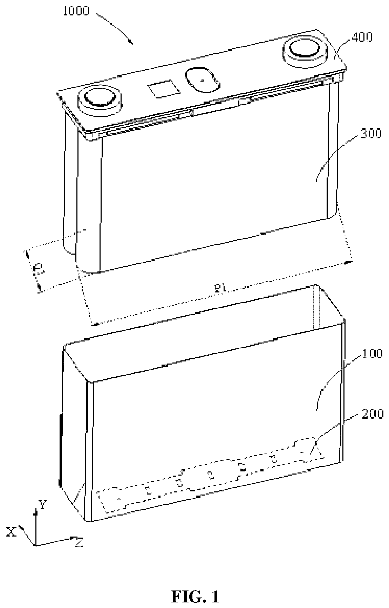

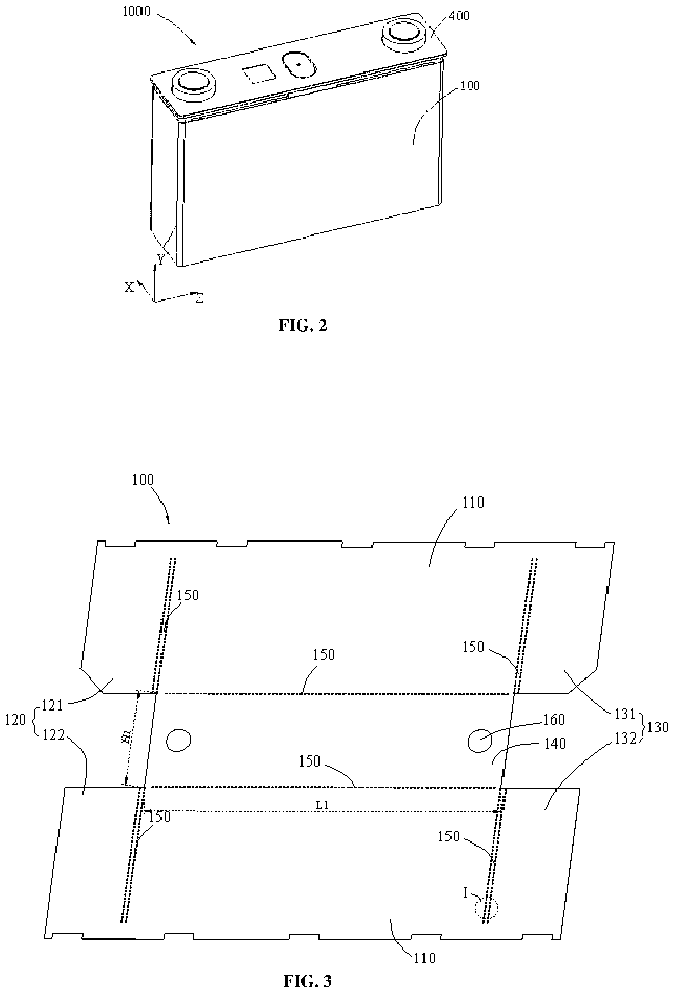

Referring to FIG. 1 and FIG. 2, the present disclosure discloses an energy storage device 1000, comprising a housing, a bare cell 300, an end cover assembly 400, and a protective film assembly. The insulation sheet 100 wraps the bare cell 300. The insulation sheet 100 and the bare cell 300 are both accommodated in an inner cavity of the housing. The end cover assembly 400 is connected to one side of the bare cell 300 facing away from a bottom surface covering region 140 below, so that the energy storage device can realize electrical conduction, and the end cover assembly 400 covers an opening of the housing to seal the energy storage device.

The energy storage device 1000 may comprise, but is not limited to, a battery cell, a battery module, a battery pack, a battery system, etc. When the energy storage device 1000 is a battery cell, it may be a square or cylindrical battery.

In the above structure, insulation protection for the bare cell 300 can be realized by covering the bare cell 300 with the insulation sheet 100. The structure of the protective film module will be described in detail below.

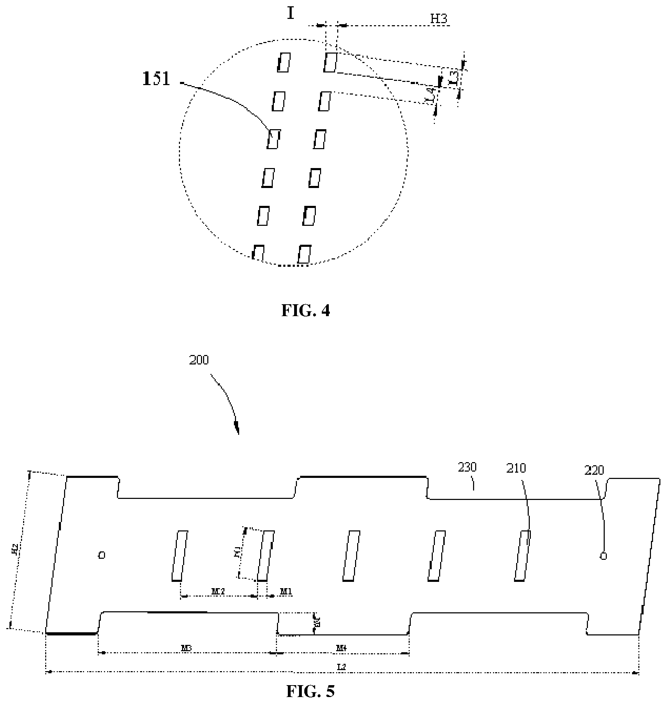

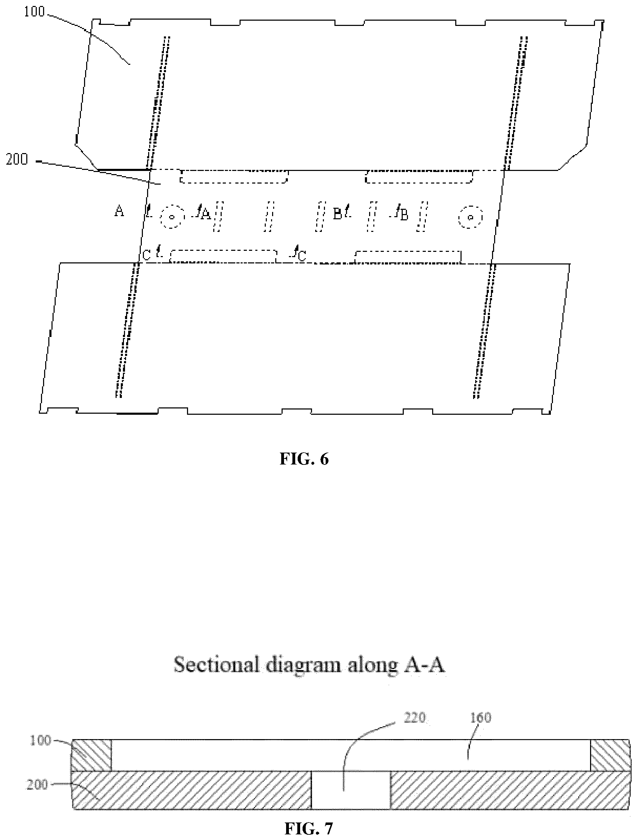

Referring to FIG. 3 to FIG. 9, the present disclosure discloses a protective film assembly applied to the bare cell 300 of the energy storage device, and comprising an insulation sheet 100. The insulation sheet 100 is used for wrapping the bare cell 300. The insulation sheet 100 is arranged between the housing of the energy storage device and the bare cell 300 to provide insulation protection. The insulation sheet 100 is integrated to facilitate bending.

The insulation sheet 100 may be provided with a plurality of fold structures 150. The fold structures 150 divide the insulation sheet 100 into a bottom surface covering region 140, a main surface covering region 110, a first side surface covering region 120 and a second side surface covering region 130. The insulation sheet 100 can be bent through the fold structures 150 to enclose the protective film assembly into a protective cover for wrapping the bare cell 300.

The bottom surface covering region 140 clings to a bottom of the bare cell 300. The main surface covering region 110 is connected to the bottom surface covering region 140, and the main surface covering region 110 clings to a main surface of the bare cell 300.

The first side surface covering region 120 comprises a first covering sub-region 121 and a second covering sub-region 122. The first covering sub-region 121 and the second covering sub-region 122 are connected to one side of the main surface covering region 110. The first covering sub-region 121 and the second covering sub-region 122 overlap after being bent along the fold structures 150, and cling to a first side surface of the bare cell 300 that is perpendicular to the main surface.

The second side surface covering region 130 comprises a third covering sub-region 131 and a fourth covering sub-region 132. The third covering sub-region 131 and the fourth covering sub-region 132 are connected to the other side of the main surface covering region 110. The third covering sub-region 131 and the fourth covering sub-region 132 overlap after being bent along the fold structures 150, and cling to a second side surface of the bare cell 300 that is perpendicular to the main surface, the first side surface and the second side surface are oppositely arranged.

It can be seen that, in the first aspect, the insulation sheet 100 in the present disclosure is integrated, which is convenient for bending and bonding. By means of integration, the insulation sheet 100 can be bent to form a protective cover, so that the possibility of reserving gaps at edges of the protective cover, thereby improving the wrapping effect on the bare cell 300.

In the second aspect, the first covering sub-region 121 and the second covering sub-region 122 clinging to one side of the main surface covering region 110, and the third covering sub-region 131 and the fourth covering sub-region 132 clinging to the other side of the main surface covering region 110, so that the insulation sheet 100 has more bonding positions after being bent, thereby obtaining a larger bonding area, and improving the wrapping effect on the bare cell 300.

Optionally, the maximum size of the first covering sub-region 121 in a first direction X is equal to the maximum size of the second covering sub-region 122 in the first direction X. The maximum size of the first covering sub-region 121 in a second direction Y is equal to the maximum size of the second covering sub-region 122 in the second direction Y. The first direction X is a thickness direction of the bare cell 300, and the second direction Y is a height direction of the bare cell 300. In this way, an area and shape of the first covering sub-region 121 are basically the same as those of the second covering sub-region 122.

Generally, a surface of the bare cell 300 comprises a bottom surface and a circumferential surface. The circumferential surface also comprises narrow surfaces and a main surface. The narrow surfaces comprise the first side surface and the second side surface above, and an area of each narrow surface is smaller than that of the main surface. The insulation sheet 100 should match the bare cell 300. That is, the shape and area of the main surface covering region 110 are basically the same as those of the main surface. The areas and shapes of the first covering sub-region 121 and the second covering sub-region 122 are basically the same as those of the first side surface. The areas and shapes of the third covering sub-region 131 and the fourth covering sub-region 132 are basically the same as those of the second side surface. The area and shape of the bottom surface covering region 140 are basically the same as those of the bottom surface. In this way, the insulation sheet 100 can achieve perfect wrapping on the bare cell 300.

It can be seen that, in the first aspect, by means of size control of the first covering sub-region 121 and the second covering sub-region 122, the matching degree between the first covering sub-region 121 and the second covering sub-region 122 is increased. In this way, a large bonding area can be ensured between the first covering sub-region 121 and the second covering sub-region 122, so as to ensure the structural stability of the formed protective cover, thus ensuring a good insulation effect and improving the safety performance of the energy storage device.

In the second aspect, due to the high matching degree between the first covering sub-region 121 and the second covering sub-region 122, no materials will be wasted in the first covering sub-region 121 and the second covering sub-region 122, which saves the material cost.

To sum up, the protective film assembly of the present disclosure can reduce the cost, improve the efficiency and improve insulation performance.

Optionally, according to a requirement for the shape of the bare cell 300, the bottom surface covering region 140 can be set to satisfy:

273 mm $\leq$ L1 $\leq$ 277 mm, such as L1 = 273 mm, 275.07 mm, and 277 mm, preferably L1 = 275.07 mm;

55.5 mm $\leq$ H1 $\leq$ 59.5 mm, such as H1 = 55.5 mm, and 59.5 mm, preferably H1 = 57.51 mm.

L1 is a length of the bottom surface covering region 140. H1 is a width of the bottom surface covering region 140. Such length and width of the bottom surface covering region 140 can maintain a high matching degree with the bare cell 300, so that the wrapping effect on the bare cell 300 is improved.

Optionally, the bottom surface covering region 140 satisfies:

1.03 $\leq$ P1/L1 $\leq$ 1.06, such as P1/L1 = 1.03, 1.05, 1.06.

1.03 $\leq$ Q1/H1 $\leq$ 1.06, such as Q1/H1 = 1.03, 1.05, 1.06.

P1 is a length of the bare cell 300. Q1 is a thickness of the bare cell 300. A lengthwise direction of the bottom surface covering region 140 and a lengthwise direction of the bare cell 300 are both along a third direction Z, and a width direction of the bottom surface covering region 140 and a thickness direction of the bare cell 300 both face the first direction X.

**If** the bottom surface covering region 140 is much smaller than the bare cell 300, it is not conducive to the wrapping of the bare cell 300. If the bottom surface covering region 140 is much larger than the bare cell 300, it will lead to material waste, and there is a space between the bottom surface covering region and the bare cell 300, affecting the wrapping effect. Therefore, the design is made according to the above size proportions, which further increases the matching degree with the bare cell 300. It can not only ensure the wrapping effect on the bare cell 300, but also help to save the material cost.

Optionally, the bottom surface covering region 140 satisfies: 0.19 $\leq$ H1/L1 $\leq$ 0.21, such as H1/L1=0.19, 0.2, 0.21. Such a length-to-width ratio of the bottom surface covering region 140 has a good fitness with the bare cell 300 of a square energy storage device and a housing of the square energy storage device. It is suitable for wrapping the bare cell 300 of the square energy storage device. After the bare cell 300 is wrapped, the whole is also easily put into the housing of the square energy storage device to improve the assembling efficiency.

Optionally, the maximum size of the third covering sub-region 131 in the first direction X is equal to the maximum size of the fourth covering sub-region 132 in the first direction X, and the maximum size of the third covering sub-region 131 in the second direction Y is equal to the maximum size of the fourth covering sub-region 132 in the second direction Y. The first direction X is the thickness direction of bare cell 300, and the second direction Y is the height direction of bare cell 300. In this way, an area and shape of the third covering sub-region 131 are basically the same as those of the fourth covering sub-region 132.

In this way, by means of size control of the third covering sub-region 131 and the fourth covering sub-region 132, the matching degree between the third covering sub-region 131 and the fourth covering sub-region 132 is increased. In this way, a large bonding area can be ensured between the third covering sub-region 131 and the fourth covering sub-region 132, so as to further ensure the structural stability of the formed protective cover, thus better ensuring a good insulation effect and improving the safety performance of the energy storage device.

At the same time, due to the high matching degree between the third covering sub-region 131 and the fourth covering sub-region 132, no materials will be wasted in the third covering sub-region 131 and the fourth covering sub-region 132, which saves the material cost.

A specific bending method for the above insulation sheet 100 is as follows:
The bottom surface covering region 140 clings to the bottom of the bare cell 300.

Two main surface covering regions 110 are bent 90° relative to the bottom surface covering region 140 in a face-to-face manner, and cling to the main surface of the bare cell 300.

The first covering sub-region 121 and the second covering sub-region 122 are then bent 90° along the fold structures 150, and overlap each other to cling to the first side surface of the bare cell 300.

The third covering sub-region 131 and the fourth covering sub-region 132 are then bent 90° along the fold structures 150, and overlap each other to cling to the second side surface of the bare cell 300.

So far, the insulation sheet 100 is bent into a protective cover to wrap the bottom surface, main surface, first side surface and second side surface of the bare cell 300. Only two gaps are reserved in the protective cover formed after the insulation sheet 100 is bent. The two gaps are respectively located at an intersection of the first side surface covering region 120 and the bottom surface covering region 140 and at an intersection of the second side surface covering region 130 and the bottom surface covering region 140, and are disposed in the third direction Z. The third direction Z is the lengthwise direction of the bare cell 300. In this way, the sealing effect on the protective cover is good.

Optionally, one side of the first covering sub-region 121 close to the second covering sub-region 122 is provided with a chamfer structure, and/or one side of the third covering sub-region 131 close to the fourth covering sub-region 132 is provided with a chamfer structure, which can achieve a fool-proofing effect. Specifically, in the bending process of the insulation sheet 100, the second covering sub-region 122 first cling to the first side surface of the bare cell 300, and the first covering sub-region 121 then cling to one side of the second covering sub-region 122 facing away from the bare cell 300. Similarly, the fourth covering sub-region 132 first cling to the second side surface of the bare cell 300, and the third covering sub-region 131 then cling to the one side of the fourth covering sub-region 132 facing away from the bare cell 300.

It can be seen that the chamfer structures are designed to distinguish the first covering sub-region 121 from the second covering sub-region 122 and distinguish the third covering sub-region 131 from the fourth covering sub-region 132, so as to prevent disordered bonding of the covering sub-regions during bending.

Optionally, for a specific form of the fold structures 150, the fold structures 150 may comprise a plurality of through holes 151. The plurality of through holes 151 are arranged in turn along a fold forming direction of the fold structures 150. This material removal method makes it easy to bend the positions where the fold structures 150 are located, thereby reducing the difficulty of forming the protective cover by the insulation sheet 100 and improving the operability of bending. Optionally, the fold structures 150 may also be scratches, etc., which will not be detailed here.

Optionally, a plurality of through holes 151 can be arranged in columns along the fold forming direction, and the fold structures 150 may comprise one or two columns of through holes 151.

The number of columns of through holes 151 in the fold structures 150 matches the shape of corners of the bare cell 300. Specifically, when the corners are intersections between the bottom surface and the main surface, the first side surface, the second side surface of the bare cell 300. The corners usually have sharp edges. Therefore, the fold structures 150 adjacent to the main surface covering region 110 can be provided with only one column of through holes 151 to correspond to the corners of the sharp edge structure of the bare cell 300.

When the corners are intersections between the main surface and the first side surface, the second side surface of the bare cell 300. The corners are usually rounded, so the fold structures 150 adjacent to the first covering sub-region 121, the second covering sub-region 122, the third covering sub-region 131 and the fourth covering sub-region 132 can be provided with two columns of through holes 151. In this way, during bending, the positions of the two columns of through holes 151 can be bent into rounded corners to better wrap the corners of the rounded structure of the bare cell 300.

Optionally, each through hole 151 may be a round hole, an elliptical hole or holes of other shapes. In the present disclosure, the through hole 151 is a rectangular hole. Specifically, the through hole 151 satisfies:

0.7 mm≤L3≤1.3 mm, such as L3=0.7 mm, 1 mm, and 1.3 mm, preferably L3=1 mm.

0.06 mm≤H3≤0.21 mm, such as H3=0.06 mm, 0.1 mm, and 0.21 mm, preferably H3=0.1 mm.

L3 is a length of the through hole 151, and H3 is a width of the through hole 151.

If an opening area of the through hole 151 is too large, the bare cell 300 will be exposed too much, which will affect the insulation protection effect. If the hole area of the through hole 151 is too small, it is not conducive to bending. Therefore, the hole area is controlled according to the above sizes, which can not only ensure the wrapping of the bare cell 300, but also facilitate the insulation sheet 100 to be bent.

Optionally, a lengthwise direction of the through hole 151 may be parallel to the fold forming direction, so that while the fold structures 150 are easy to bend, a total area of the holes formed in the fold structures 150 is small, so as to reduce the exposure of the bare cell 300.

Optionally, the through hole 151 satisfies: $9 \leq L3/H3 \leq 11$, such as L3/H3=9, 10, 11. By means of controlling the length-width ratio of the through hole 151, the shape of the through hole 151 is further controlled, so as to give better consideration to the wrapping performance for the bare cell 300 and the bending performance of the insulation sheet 100.

Optionally, the through hole 151 satisfies: $0.7 \text{ mm} \leq L4 \leq 0.9 \text{ mm}$, such as L4=0.7 mm, 0.8 mm, and 0.9 mm, preferably L4=0.8 mm. L4 is a size of a spacing between adjacent through holes 151. By means of controlling the spacing size, the layout density of the through holes 151 is adjusted to further control and adjust the bending performance of the insulation sheet 100 and the wrapping performance for the bare cell 300.

Optionally, the through hole 151 satisfies: $1.2 \leq L3/L4 \leq 1.3$, such as L3/L4=1.2, 1.25, 1.3. By means of controlling the length/spacing ratio of the through hole 151, the density of the through holes 151 is adjusted to further control and adjust the bending performance of the insulation sheet 100 and the wrapping performance for the bare cell 300, so that the two performances are better considered.

Optionally, the protective film assembly may also comprise a bottom supporting plate 200. The bottom supporting plate 200 is stacked on one surface of the bottom surface covering region 140 close to the bottom of the bare cell 300, such as one surface of the bottom surface covering region 140 facing away from the bare cell 300. In this setting, the bottom supporting plate 200 has the function of supporting the bottom, so that the protective cover formed by the protective film assembly has better structural stability, thereby improving the wrapping effect.

Optionally, one side of the bottom supporting plate 200 facing the bottom surface covering region 140 can be provided with a plurality of hot-melting portions 210, and the bottom supporting plate 200 can be connected with the insulation sheet 100 through the plurality of hot-melting portions 210 in a hot-melting manner to improve the connection stability. The hot-melting portions 210 may be of groove structures, so that it is hard for formed molten points to protrude, thereby avoiding interference with the installation of the bare cell 300 and avoiding the risk such as short circuit.

Optionally, the hot-melting portion 210 satisfies:

$2.7 \text{ mm} \leq M1 \leq 2.9 \text{ mm}$, such as M1 = 2.7 mm, 2.8 mm, and 2.9 mm, preferably M1 = 2.8 mm.

$13 \text{ mm} \leq N1 \leq 13.6 \text{ mm}$, such as N1 = 13.32 mm, 13 mm, and 13.6 mm, preferably N1 = 13.32 mm.

M1 is a width of the hot-melting portion 210, and N1 is a length of the hot-melting portion 210.

If an arrangement region of the hot-melting portions 210 is too small, it is not conducive to achieving hot-melting connection, which will affect the connection stability. If the arrangement region of the hot-melting portions 210 is too large, it is not conducive to the structural stability of the bottom supporting plate 200. Therefore, the arrangement region is controlled according to the above sizes, which can ensure the stability of hot-melting connection and also ensure the sufficient strength of the bottom supporting plate 200.

Optionally, the hot-melting portion 210 satisfies: $4.5 \leq N1/M1 \leq 5$, such as N1/M1=4.5, 4.7, 5. By means of controlling the length-to-width ratio of the hot-melting portion 210, the shape of the hot-melting portion 210 is further controlled, which is more suitable for the hot-melting connection between the insulation sheet 100 and the bottom supporting plate 200 in the square energy storage device.

Optionally, too dense hot-melting portions 210 will affect the structural stability of the bottom supporting plate 200, while too sparse hot-melting portions 210 will reduce the hot-melting stability between the insulation sheet 100 and the bottom supporting plate 200. Therefore, the hot-melting portion 210 can be set to satisfy: $30 \text{ mm} \leq M2 \leq 30.6 \text{ mm}$, such as M2=30mm, 30.35mm, and 30.6mm, preferably M2=30.35 mm. M2 is a size of a spacing between adjacent hot-melting portions 210. By means of controlling the spacing between the hot-melting portions 210, the bottom supporting plate 200 gives consideration to both the hot-melting stability and the structural stability.

Optionally, a width direction of the hot-melting portion 210 can be consistent with the lengthwise direction of the bottom supporting plate 200 and the lengthwise direction of the bottom surface covering region 140, and the plurality of hot-melting portions 210 may be disposed in turn in the lengthwise direction of the bottom surface covering region 140. A lengthwise direction of the hot-melting portion 210 may be consistent with the width direction of the bottom supporting plate 200 and the width direction of the bottom surface covering region 140. In this way, the hot-melting portion 210 clings more firmly to the bottom surface covering region 140 in both the lengthwise and width directions.

Optionally, the hot-melting portion 210 satisfies: $0.08 \leq M1/M2 \leq 0.1$, such as $M1/M2=0.08, 0.09, 0.1$. By means of controlling the width-to-spacing ratio of the hot-melting portion 210, the density of the hot-melting portions 210 is adjusted to further enable the bottom supporting plate 200 to give consideration to both the hot-melting stability and the structural stability.

Optionally, the insulation sheet 100 can be provided with a first permeable hole 160, and the bottom supporting plate 200 can be provided with a second permeable hole 220. A forming direction of the first permeable hole 160 points to the bare cell 300. The second permeable hole 220 is communicated to the first permeable hole 160. An opening area of the first permeable hole 160 is larger than that of the second permeable hole 220. In this setting, the first permeable hole 160 and the second permeable hole 220 can cooperate with each other. Gas and liquid generated by expansion of the bare cell 300 are discharged in time to further improve the safety performance of the energy storage device.

Optionally, a projection of the second permeable hole 220 formed on the insulation sheet 100 can be located in the first permeable hole 160, that is, the opening area of the second permeable hole 220 is smaller than or equal to that of the first permeable hole 160. In this way, dislocation between the second permeable hole 220 and the first permeable hole 160 can be avoided, thus ensuring the circulation area. The circulation smoothness can be improved, thus improving the discharging performance for the gas and liquid generated by the expansion of the bare cell 300.

Optionally, a projection area of the bottom supporting plate 200 along the height direction of the bare cell 300 is smaller than that of the bottom surface covering region 140 along the height direction of the bare cell 300. It can be seen that the height direction of the bare cell 300 is the second direction Y, which is also a direction in which the bare cell 300 is installed into the housing. The area of the bottom supporting plate 200 is slightly smaller than that of the bottom surface covering region 140, so as to ensure the supporting function of the bottom supporting plate 200 to the bottom surface covering region 140. It is also convenient to mount the bare cell 300, the bottom supporting plate 200 and the insulation sheet 100 into the housing of the energy storage device, thus improving the assembling efficiency of the energy storage device.

Optionally, the bottom supporting plate 200 satisfies:

268 mm $\leq$ L2 $\leq$ 273 mm, such as L2 = 270 mm, 268 mm, and 272 mm, preferably L2 = 270 mm.

55 mm $\leq$ H2 $\leq$ 55.6 mm, such as H2 = 55.31 mm, 55 mm, and 55.6 mm, preferably H2 = 55.31 mm.

**L2** is a length of the bottom supporting plate 200, and H2 is a width of the bottom supporting plate 200. The lengthwise direction of the bottom supporting plate 200 is consistent with the lengthwise direction of the bottom surface covering region 140. The width direction of the bottom supporting plate 200 is consistent with the width direction of the bottom surface covering region 140, so as to be more suitable for the square energy storage device. Specifically, the supporting reinforcement at the bottom surface covering region 140 is better achieved.

Optionally, the bottom supporting plate 200 satisfies: $0.19 \leq H2/L2 \leq 0.21$, such as $H2/L2=0.19, 0.2, 0.21$. By means of controlling the length-to-width ratio of the bottom supporting plate 200, the shape of the bottom supporting plate 200 is further controlled, so as to be more conductive to the supporting function of the square energy storage device.

Optionally, the bottom supporting plate 200 satisfies: $1.01 \leq L1/L2 \leq 1.03$, such as $I1/L2=1.01, 1.02, 1.03$. $1.01 \leq H1/H2 \leq 1.03$, such as $H1/H2=1.01, 1.02, 1.03$. As mentioned above, L1 is the length of the bottom surface covering region 140, and H1 is the width of the bottom surface covering region 140. In this way, by means of adjusting the length ratio and the width ratio of the bottom supporting plate 200 to the bottom surface covering region 140, the size of the bottom supporting plate 200 relative to the bottom surface covering region 140 is further controlled, so as to give better consideration to the supporting reinforcement performance and interference prevention performance of the bottom supporting plate 200, and avoid the interference between the bottom supporting plate 200 and edges, rounded corners and the like in the housing after the bottom supporting plate is mounted in the housing.

Optionally, the bottom supporting plate 200 may be provided with a plurality of notches 230. The notches 230 are arranged at an edge of the bottom supporting plate 200. The notches 230 are used for communication with the inner cavity of the housing. In this way, after the insulation sheet 100 is mounted in the housing, the bottom supporting plate 200 separates the bottom surface covering region 140 from a bottom of the housing, and electrolyte in the inner cavity of the housing can be stored in the notches 230.

Optionally, the notch 230 satisfies: $79.6$ mm $\leq M3 \leq 80$ mm, such as M3=79.8 mm, 79.6 mm, and 80 mm, preferably M3=79.8 mm. $6.5$ mm$\leq N3 \leq 7.5$ mm, such as N3=7 mm, 6.5 mm, and 7.5 mm, preferably N3=7 mm. M3 is a length of the notch 230, and N3 is a width of the notch 230.

In this way, it can be ensured that the notch 230 has a large enough opening area, so as to have a sufficient liquid storage capacity, and the overall structural strength of the bottom supporting plate 200 will not be affected due to extremely large notches 230.

Optionally, the plurality of notches 230 can be disposed in sequence along the lengthwise direction of the bottom supporting plate 200. The lengthwise direction of the notch 230 is consistent with the lengthwise direction of the bottom supporting plate 200, so that the bottom supporting plate 200 can be provided with more notches 230 to improve the liquid storage capacity.

Optionally, the notches 230 can be arranged on two opposite sides of the bottom supporting plate 200 toward the first direction X, so that the bottom supporting plate 200 can achieve higher liquid storage capacity.

Optionally, the notch 230 satisfies: $0.45 \leq M3/L2 \leq 0.5$, such as M3/L2=0.45, 0.47, 0.5. As mentioned above, L2 is the length of the bottom supporting plate 200. By means of adjusting the length ratio of the notch 230 to the bottom supporting plate 200, the density of the notches 230 in the bottom supporting plate 200 can be adjusted, so as to give better consideration to the liquid storage capacity of the notches 230 and the structural stability of the bottom supporting plate 200.

Optionally, the notch 230 satisfies: $49.2 \text{ mm} \leq M4 \leq 50.2 \text{ mm}$, such as M4=49.72 mm, 49.2 mm, and 50.2 mm, preferably M4=49.72 mm. M4 is a size of a spacing between adjacent notches 230. By means of controlling the size of the spacing, the density of the notches 230 in the bottom supporting plate 200 can be adjusted, so as to give better consideration to the liquid storage capacity of the notches 230 and the structural stability of the bottom supporting plate 200.

Optionally, the notch 230 satisfies: $1.4 \leq M3/M4 \leq 1.8$, such as M3/M4=1.4, 1.6, 1.8. By means of adjusting the length-to-spacing ratio of the notch 230, the proportion of the notches 230 in the lengthwise direction of the bottom supporting plate 200 can be adjusted, which further adjusts the density of the notches 230 in the bottom supporting plate 200, so that the liquid storage capacity of the notch 230 and the structural stability of the bottom supporting plate 200 can be better considered.

Optionally, the hardness of the bottom supporting plate 200 can be greater than that of the insulation sheet 100, which can further improve the structural stability of the protective cover formed by the protective film assembly.

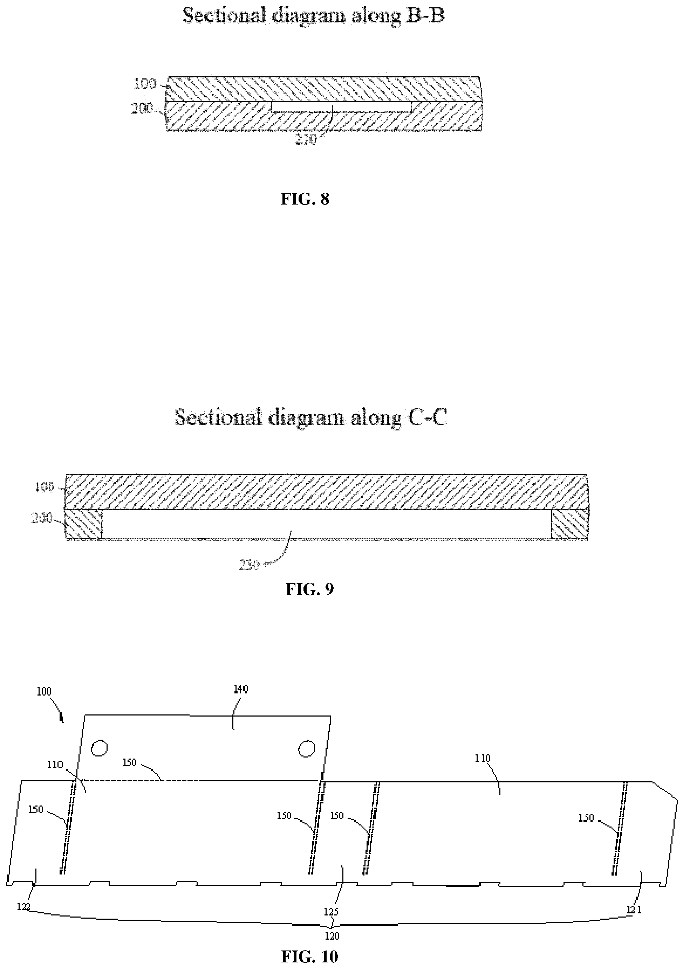

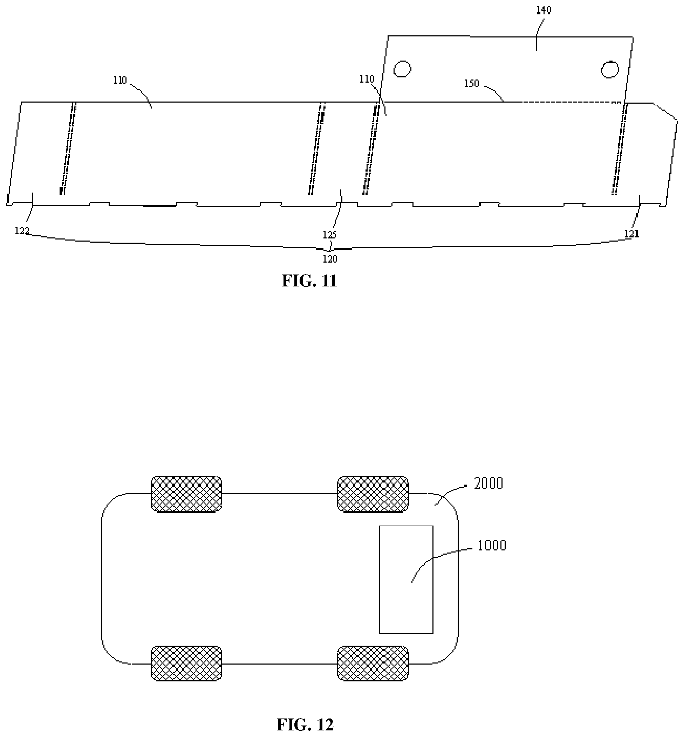

Optionally, FIG. 10 and FIG. 11 are another two mirrored layout structures of the insulation sheet 100 of the present disclosure. Specifically, there are two main surface covering regions 110. The first side surface covering region 120 may comprise a first covering sub-region 121, a fifth covering sub-region 125 and a second covering sub-region 122 which are arranged in turn. One of the two main surface covering regions 110 is connected between the first covering sub-region 121 and the fifth covering sub-region 125, and the other main surface covering region is connected between the fifth covering sub-region 125 and the second covering sub-region 122.

The bottom surface covering region 140 is connected to one of the two main surface covering regions 110. As shown in FIG. 10, the bottom surface covering region 140 is connected to the main surface covering region 110 between the fifth covering sub-region 125 and the second covering sub-region 122. Or, as shown in FIG. 11, the bottom surface covering region 140 is connected to the main surface covering region 110 between the fifth covering sub-region 125 and the first covering sub-region 121.

The first covering sub-region 121 and the second covering sub-region 122 overlap after being bent along the fold structures 150, and cling to the first side surface of the bare cell 300 perpendicular to the main surface. The fifth covering sub-region 125 is bent along the fold structures 150, and then cling to the second side surface of the bare cell 300 perpendicular to the main surface.

Optionally, the maximum size of the first covering sub-region 121 in the first direction X, the maximum size of the second covering sub-region 122 in the first direction X, and the maximum size of the fifth covering sub-region 125 in the first direction X are equal. The maximum size of the first covering sub-region 121 in the second direction Y, the maximum size of the second covering sub-region 122 in the second direction Y, and the maximum size of the fifth covering sub-region 125 in the second direction Y are equal, and the second direction Y is the height direction of the bare cell 300.

It can be seen that when the layout structures of the insulation sheet 100 in FIG. 10 and FIG. 11 are compared with the layout structure of the insulation sheet 100 in FIG. 3, the functions of the third covering sub-region 131 and the fourth covering sub-region 132 can be realized only with one fifth covering sub-region 125. This can reduce the materials used for bonding the bare cell 300, thus reducing the overall area of the insulation sheet 100 and saving the material cost.

The energy storage device can be applied to a vehicle shown in FIG. 12 and other electric equipment 2000, which will not be detailed here. The electric equipment comprises the above energy storage device 1000. The technical solutions of the embodiments of the present disclosure are all applicable to various kinds of electric equipment using energy storage devices, such as an electric bicycle, an electric toy, an electric tool, an electric vehicle, ship and space vehicle, a mobile phone, portable equipment, a laptop, and a notebook.

The protective film assembly and energy storage device disclosed in the present are described in detail above. The principle and implementation of the present are expounded with specific examples in this document. The description of the above embodiments is only intended to help understand the protective film assembly and energy storage device of the present and their core ideas. At the same time, for those ordinarily skilled in the art, according to the idea of the present,that they will modify in specific implementation methods and application scopes. In summary, the content of this specification should not be understood as a limitation on the present.

## Claims

1. A protective film assembly, applied to a bare cell of an energy storage device and comprising an insulation sheet (100) used for wrapping the bare cell (300), wherein the insulation sheet (100) is arranged between a housing of the energy storage device and the bare cell (300); **characterized in that** the insulation sheet (100) is integrated and is provided with a plurality of fold structures (150);

   the fold structures (150) comprise a plurality of through holes (151), the plurality of through holes (151) are arranged in sequence along a fold forming direction of the fold structures (150); the plurality of through holes (151) are arranged in rows along the fold forming direction, and the fold structures (150) comprises two rows of through holes (151);
   the fold structures (150) divide the insulation sheet (100) into:

   a bottom surface covering region (140), clinging to a bottom of the bare cell (300);
   a main surface covering region (110), connected to the bottom surface covering region (140) and clinging to a main surface (110) of the bare cell (300);
   a first side surface covering region (120), comprising a first covering sub-region (121) and a second covering sub-region (122), wherein the first covering sub-region (121) and the second covering sub-region (122) are connected to a side of the main surface covering region (110); the first covering sub-region (121) and the second covering sub-region (122) overlap after being bent along the fold structures (150), and cling to a first side surface of the bare cell (300) perpendicular to the main surface;
   and a second side surface covering region (130), comprising a third covering sub-region (131) and a fourth covering sub-region (132), wherein the third covering sub-region (131) and the fourth covering sub-region (132) are connected to an other side of the main surface covering region (110), the third covering sub-region (131) and the fourth covering sub-region (132) overlap after being bent along the fold structures (150), and cling to a second side surface of the bare cell (300) perpendicular to the main surface; the first side surface and the second side surface are oppositely arranged;
   wherein a maximum size of the first covering sub-region (121) in a first direction (X) is equal to a maximum size of the second covering sub-region (122) in the first direction (X), and a maximum size of the first covering sub-region (121) in a second direction (Y) is equal to a maximum size of the second covering sub-region (122) in the second direction (Y);
   a maximum size of the third covering sub-region (131) in the first direction (X) is equal to a maximum size of the fourth covering sub-region (132) in the first direction (X), and a maximum size of the third covering sub-region (131) in the second direction (Y) is equal to a maximum size of the fourth covering sub-region (132) in the second direction (Y);
   wherein the first direction (X) is a thickness direction of the bare cell (300), and the second direction (Y) is a height direction of the bare cell (300).

2. The protective film assembly according to claim 1, wherein the bottom surface covering region (140) satisfies: 273 mm$\leq$L1$\leq$277 mm, and 55.5 mm$\leq$H1$\leq$59.5 mm;

   where L1 is a length of the bottom surface covering region (140); and
   H1 is a width of the bottom surface covering region (140).

3. The protective film assembly according to claim 2, wherein the bottom surface covering region (140) satisfies:

$$1.03 \leq P1/L1 \leq 1.06, \text{ and } 1.03 \leq Q1/H1 \leq 1.06;$$

   where P1 is a length of the bare cell (300), and Q1 is a thickness of the bare cell (300);
   a lengthwise direction of the bottom surface covering region (140) and a lengthwise direction of the bare cell (300) are both along a third direction (Z), and a width direction of the bottom surface covering region (140) and a thickness direction of the bare cell (300) are both along the first direction (X).

4. The protective film assembly according to claim 2 or 3, wherein the bottom surface covering region (140) satisfies:

$$0.19 \leq H1/L1 \leq 0.21.$$

5. The protective film assembly according to any one of claims 1 to 4, wherein a side of the first covering sub-region (121) close to the second covering sub-region (122) is provided with a chamfer structure, and/or a side of the third covering sub-region (131) close to the fourth covering sub-region (132) is provided with a chamfer structure.

6. The protective film assembly according to any one of claims 1 to 5, wherein the through hole (151) satisfies:

$$0.7 \text{ mm} \leq L3 \leq 1.3 \text{ mm, and } 0.06 \text{ mm} \leq H3 \leq 0.21 \text{ mm,}$$

where L3 is a length of the through hole (151), and H3 is a width of the through hole (151).

7. The protective film assembly according to claim 6, wherein a lengthwise direction of the through hole (151) is parallel to the fold forming direction.

8. The protective film assembly according to claim 6 or 7, wherein the through hole (151) satisfies: $9 \leq L3/H3 \leq 11$.

9. The protective film assembly according to any one of claims 6 to 8, wherein the through hole (151) satisfies: $0.7 \text{ mm} \leq L4 \leq 0.9 \text{ mm}$; and L4 is a size of a spacing between adjacent through holes (151).

10. The protective film assembly according to claim 9, wherein the through hole (151) satisfies: $1.2 \leq L3/L4 \leq 1.3$.

11. The protective film assembly according to claim 1, further comprising a bottom supporting plate (200), stacked on a surface of the bottom surface covering region (140) close to the bottom of the bare cell (300).

12. The protective film assembly according to claim 11, wherein a side of the bottom supporting plate (200) facing the bottom surface covering region (140) is provided with a plurality of hot-melting portions (210), the bottom supporting plate (200) is connected to the insulation sheet (100) through the plurality of hot-melting portions (210) in a hot-melting manner.

13. The protective film assembly according to claim 12, wherein the hot-melting portion (210) satisfies:

$$2.7 \text{ mm} \leq M1 \leq 2.9 \text{ mm, and } 13 \text{ mm} \leq N1 \leq 13.6 \text{ mm;}$$

wherein M1 is a width of the hot-melting portion (210); and N1 is a length of the hot-melting portion (210).

14. The protective film assembly according to claim 13, wherein the hot-melting portion (210) satisfies $4.5 \leq N1/M1 \leq 5$.

15. The protective film assembly according to claim 13 or 14, wherein the hot-melting portion (210) satisfies: $30 \text{ mm} \leq M2 \leq 30.6 \text{ mm}$; and M2 is a size of a spacing between adjacent hot-melting portions (210).

16. The protective film assembly according to any one of claims 12 to 15, wherein a width direction of the hot-melting portion (210) is consistent with the lengthwise direction of the bottom surface covering region (140), and the plurality of hot-melting portions (210) are disposed in sequence in the lengthwise direction of the bottom surface covering region (140); and a lengthwise direction of the hot-melting portion (210) is consistent with the width direction of the bottom surface covering region (140).

17. The protective film assembly according to claim 15, wherein the hot-melting portion (210) satisfies: $0.08 \leq M1/M2 \leq 0.1$.

18. The protective film assembly according to any one of claims 11 to 17, wherein the insulation sheet (100) is provided with a first permeable hole (160), and the bottom supporting plate (200) is provided with a second permeable hole (220); the first permeable hole (160) is in communication with the second permeable hole (220); and an opening area of the first permeable hole (160) is larger than an opening area of the second permeable hole (220).

19. The protective film assembly according to any one of claims 11 to 18, wherein a projection area of the bottom supporting plate (200) along the height direction of the bare cell (300) is smaller than a projection area of the bottom surface covering region (140) along the height direction of the bare cell (300).

20. The protective film assembly according to claim 19, wherein the bottom supporting plate (200) satisfies:

$$268 \text{ mm} \leq L2 \leq 272 \text{ mm, and } 55 \text{ mm} \leq H2 \leq 55.6 \text{ mm,}$$

where L2 is a length of the bottom supporting plate (200), and H2 is a width of the bottom supporting plate (200); a lengthwise direction of the bottom supporting plate (200) is consistent with the lengthwise direction of the bottom surface covering region (140); and a width direction of the bottom supporting plate (200) is consistent with the width direction of the bottom surface covering region (140).

21. The protective film assembly according to claim 20, wherein the bottom supporting plate (200) satisfies: $0.19 \leq H2/L2 \leq 0.21$.

22. The protective film assembly according to claim 20, wherein the bottom supporting plate (200) satisfies:

$$1.01 \leq L1/L2 \leq 1.03, \text{ and } 1.01 \leq H1/H2 \leq 1.03,$$

where L1 is a length of the bottom surface covering region (140), and H1 is the width of the bottom surface covering region (140).

23. The protective film assembly according to any one of claims 11 to 19, wherein the bottom supporting plate (200) is provided with a plurality of notches (230); the notches (230) are arranged at an edge of the bottom supporting plate (200); and the notches (230) are used for being in communication with an inner cavity of the housing.

24. The protective film assembly according to claim 23, wherein the notch (230) satisfies:

$$79.6 \text{ mm} \leq M3 \leq 80 \text{ mm, and } 6.5 \text{ mm} \leq N3 \leq 7.5 \text{ mm,}$$

where M3 is a length of the notch (230), and N3 is a width of the notch (230).

25. The protective film assembly according to claim 23 or 24, wherein the plurality of notches (230) are disposed in sequence along a lengthwise direction of the bottom supporting plate (200); and the lengthwise direction of the notch (230) is consistent with the lengthwise direction of the bottom supporting plate (200).

26. The protective film assembly according to claim 24, wherein the notch (230) satisfies:

$$0.45 \leq M3/L2 \leq 0.5,$$

where L2 is a length of the bottom supporting plate (200).

27. The protective film assembly according to claim any one of claims 24 to 26, wherein the notch (230) satisfies: $49.2 \text{ mm} \leq M4 \leq 50.2 \text{ mm}$; and M4 is a size of a spacing between adjacent notches (230).

28. The protective film assembly according to claim 27, wherein the notch (230) satisfies: $1.4 \leq M3/M4 \leq 1.8$.

29. A protective film assembly, applied to a bare cell of an energy storage device and comprising an insulation sheet (100) used for wrapping the bare cell (300), wherein the insulation sheet (100) is arranged between a housing of the energy storage device and the bare cell (300); **characterized in that**, the insulation sheet (100) is integrated and is provided with a plurality of fold structures (150), the fold structures (150) divide the insulation sheet (100) into:

two main surface covering regions (110), clinging to main surfaces of the bare cell (300);

a first side surface covering region (120), comprising a first covering sub-region (121), a fifth covering sub-region (125) and a second covering sub-region (122) which are arranged in sequence, wherein one of the two main surface covering regions (110) is connected between the first covering sub-region (121) and the fifth covering sub-region (125), and an other main surface covering region (110) is connected between the fifth covering sub-region (125) and the second covering sub-region (122); and

a bottom surface covering region (140), clinging to a bottom of the bare cell (300), wherein the bottom surface covering region (140) is connected to the one of the two main surface covering regions (110);

wherein the first covering sub-region (121) and the second covering sub-region (122) overlap after being bent along the fold structures (150) and clinging to a first side surface of the bare cell (300) perpendicular to the main surface;

the fifth covering sub-region (125) clings to a second side surface of the bare cell (300) perpendicular to the main surface after being bent along the fold structures (150); the first side surface and the second side surface are oppositely arranged;

a maximum size of the first covering sub-region (121) in a first direction (X), a maximum size of the second covering sub-region (122) in the first direction (X), and a maximum size of the fifth covering sub-region (125) in first direction (X) are equal; a maximum size of the first covering sub-region (121) in a second direction (Y), a maximum size of the second covering sub-region (122) in the second direction (Y), and a maximum size of the fifth covering sub-region (125) in the second direction (Y) are equal; and the first direction (X) is a thickness direction of the bare cell (300), and the second direction (Y) is a height direction of the bare cell (300).

30. An energy storage device, comprising a housing, a bare cell (300), an end cover assembly (400), and a protective film assembly according to any one of claims 1 to 29, wherein

an insulation sheet (100) and the bare cell (300) are both accommodated in an inner cavity of the housing;

the end cover assembly (400) is connected to a side of the bare cell (300) facing away from the bottom surface covering region (140), and hermetically covers an opening of the housing.

**FIG. 1**

FIG. 2

FIG. 3

I

H3

151

**FIG. 4**

200

230  210  220

**FIG. 5**

**FIG. 6**

Sectional diagram along A-A

**FIG. 7**

Sectional diagram along B-B

100
200
210

**FIG. 8**

Sectional diagram along C-C

100
200
230

**FIG. 9**

100
140
110
150
110
110
150
150
150
150
150
122
125
121
120

**FIG. 10**

**FIG. 11**

**FIG. 12**

## INTERNATIONAL SEARCH REPORT

| International application No. |
| --- |
| **PCT/CN2022/131501** |

| A. | CLASSIFICATION OF SUBJECT MATTER |
| --- | --- |

H01M50/102(2021.01)i; H01M50/103(2021.01)i; H01M50/593(2021.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, ENTXT, CNKI, CJFD: 电芯, 电池, 绝缘, 折痕, 折叠, 折边, 孔, 折弯, 拐角, 圆角, 包裹, 包覆; insulat+, cell, battery, crease, fold+, corner, round, coat+, package.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 216698572 U (SVOLT ENERGY TECHNOLOGY CO., LTD.) 07 June 2022 (2022-06-07)<br>  description, paragraphs 0037-0057, and figures 1-4 | 29, 30 |
| Y | CN 216698572 U (SVOLT ENERGY TECHNOLOGY CO., LTD.) 07 June 2022 (2022-06-07)<br>  description, paragraphs 0037-0057, and figures 1-4 | 1-28 |
| X | CN 213150885 U (DONGGUAN TAFEL NEW ENERGY TECHNOLOGY CO., LTD. et al.) 07 May 2021 (2021-05-07)<br>  description, paragraphs 0017-0070, and figures 1-9 | 29, 30 |
| Y | CN 213150885 U (DONGGUAN TAFEL NEW ENERGY TECHNOLOGY CO., LTD. et al.) 07 May 2021 (2021-05-07)<br>  description, paragraphs 0017-0070, and figures 1-9 | 1-28 |
| Y | CN 109962201 A (FORD GLOBAL TECHNOLOGIES, LLC) 02 July 2019 (2019-07-02)<br>  description, paragraphs 0056-0058, and figures 2-24 | 1-28 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 August 2023** | **11 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/131501** |

**C.    DOCUMENTS CONSIDERED TO BE RELEVANT**

| Category* | Citation of document, with indication, where appropriate, of the relevant passages | Relevant to claim No. |
| --- | --- | --- |
| X | CN 204927359 U (CONTEMPORARY AMPEREX TECHNOLOGY CO., LIMITED) 30 December 2015 (2015-12-30)<br>       description, paragraphs 0034-0055, and figures 1-8 | 29, 30 |
| Y | CN 204927359 U (CONTEMPORARY AMPEREX TECHNOLOGY CO., LIMITED) 30 December 2015 (2015-12-30)<br>       description, paragraphs 0034-0055, and figures 1-8 | 1-28 |
| Y | CN 112421093 A (SHENZHEN GEESUN INTELLIGENT TECHNOLOGY CO., LTD.) 26 February 2021 (2021-02-26)<br>       description, paragraph 0035, and figure 4 | 1-28 |
| A | WO 2019153459 A1 (CONTEMPORARY AMPEREX TECHNOLOGY CO., LTD.) 15 August 2019 (2019-08-15)<br>       entire document | 1-30 |

**INTERNATIONAL SEARCH REPORT**
Information on patent family members

International application No.

**PCT/CN2022/131501**

| Patent document cited in search report | | | Publication date (day/month/year) | Patent family member(s) | | | Publication date (day/month/year) |
|---|---|---|---|---|---|---|---|
| CN | 216698572 | U | 07 June 2022 | None | | | |
| CN | 213150885 | U | 07 May 2021 | None | | | |
| CN | 109962201 | A | 02 July 2019 | US | 2019189994 | A1 | 20 June 2019 |
| | | | | US | 10892458 | B2 | 12 January 2021 |
| | | | | DE | 102018132147 | A1 | 19 June 2019 |
| CN | 204927359 | U | 30 December 2015 | None | | | |
| CN | 112421093 | A | 26 February 2021 | None | | | |
| WO | 2019153459 | A1 | 15 August 2019 | None | | | |

Form PCT/ISA/210 (patent family annex) (July 2022)